# EUROPEAN PATENT SPECIFICATION

(11) **EP 0 670 682 B1**
(45) Date of publication and mention of the grant of the patent: **05.03.1997**
(21) Application number: 93922930.8
(22) Date of filing: 11.10.1993
(51) Int. Cl.: A23L 1/226, A23D 7/00

(54) **FLAVOURED LOW FAT FOOD PRODUCTS**
Aromatisierte fettarme Nahrungsmittel
PRODUITS ALLEGES ET AROMATISES

(30) Priority: 30.10.1992 EP 92203350
(43) Date of publication of application: 13.09.1995
(73) Proprietor: UNILEVER PLC, London EC4P 4BQ (GB); UNILEVER N.V., 3013 AL Rotterdam (NL)
(72) Inventor: BOT, David, Simon, Maria, NL-3571 VW Utrecht (NL)
(74) Representative: Sikken, Antonius H. J. M.
(86) International application number: EP9302787
(87) International publication number: WO9409646

(56) References cited:
- EP-A- 0 298 561
- GB-A- 1 400 592
- NL-A- 7 311 820
- US-A- 2 819 169
- DATABASE WPI Week 7733, 1977 Derwent Publications Ltd., London, GB; AN 77-64569Y & SU,A,520 967 (FATS RES INST) 24 November 1976

## Description

The present invention relates to flavoured food products containing not more than 4 wt.% fat and at least 50 wt.% water and in particular to food products which can be regarded as low fat alternatives to similar foodstuffs of substantially higher fat content such as spreads, dressings, mayonnaise, creams etc.

We have developed food products which contain not more than 4 wt.% fat and at least 50 wt.% water and which produce a taste impact which is comparable to that of their higher fat equivalents. The food products encompassed by the present invention contain the flavouring substances diacetyl and at least one of the substances 5-decanolide and 5-dodecanolide. The latter two substances are generally applied in conventional high fat products at concentration levels well above 1 ppm.
If the above compounds are added to the present food products at such concentration levels no good flavour is obtained. It is normal that a change in the nature or amounts of ingredients necessitates an adaptation of the flavouring too. We found that with normal variations of the above flavour compounds the flavour known from equivalent higher fat products could not be achieved.
Unexpectedly it was found that for achieving a comparable flavour impact it is necessary to drastically change the concentration levels of some flavouring substances as compared to their normal application levels in higher fat food products. A food product according to the invention which produces an agreeable flavour impact, should contain 0.02-0.5 ppm 5-decanolide and/or from 0.01-0.5 ppm 5-dodecanolide; and 0.5-40 ppm diacetyl. The ppm concentrations mentioned in this specification are weight/weight concentrations and always calculated on the total product weight, unless specified otherwise.

An optimum flavour impression was only obtained when the alkanolides are applied in very much lower concentration levels than the corresponding level normally applied in a high fat equivalent. Diacetyl concentration preferably is within the range of 1.0-10 ppm.

In WO 90/00354 a method is described for the delivery of fat-soluble flavour compounds into no-fat and low-fat food products by introducing into said food products fat globules comprising elevated levels of fat soluble compounds. In example 2 of the latter application an experiment is described in which a vanilla extract is added to a low-fat product at a concentration slightly lower than in a similar high fat product.

EP-A-298561 deals with the flavouring of spreads having no or a very low fat content. The product is flavoured by the addition of herbs, vegetables, nuts, cheese or butter fat particles or an undefined butter flavour cocktail.

From NL-A-73118820 can be learnt that delta-decalactone and delta-dodecalactone are flavour components appreciated for flavouring butter-like spreads. For imparting a sufficient flavour impact these are, however, to be used in relatively large amounts.

GB-A-1400592 relates to dairy, particularly cheese flavouring compositions in which 2-heptanone is an ingredient.

SU-A-520967 describes a process for imparting margarine a butter-like aroma with a flavouring composition comprising lactones, diacetyl and butyric acid.

Throughout this specification the term food product is used to encompass edible compositions intended for human consumption and particularly the low fat varieties of food products which traditionally contain substantial levels of fat, e.g. butter, margarine, creams, dressings, mayonnaise etc. According to a preferred embodiment of the invention the food product is a low fat alternative for a traditional high fat product. In this respect a high fat product is understood to contain more than 30 wt.% fat. In this patent application the terms fat and oil are treated as synonyms, both terms denoting ingredients selected from the group consisting of triglycerides, polyol fatty acid polyesters (e.g. sucrose polyester) and mixtures thereof. Although the products according to the invention may suitably include ingredients such as mono- and diglycerides these ingredients are not encompassed by the term fat. In a preferred embodiment of the invention the level of mono-and diglycerides in the present product amounts to not more than 5 wt.%, preferably not more than 3 wt.%.

Besides the application of diacetyl and the aforementioned alkanolides we have found it advantageous to include additionally other flavouring substances. According to the present invention these flavouring substances are included in the food product also at concentration levels which are unexpectedly different from the concentration levels normally applied in similar food products containing higher fat levels.
Accordingly the present product, preferably contains from 0.002 to 0.1 ppm 2-heptanone. More preferably the level of 2-heptanone is within the range of 0.005 to 0.5 ppm. According to yet another preferred embodiment the product contains from 0.001 to 0.04 ppm indol and/or from 0.001 to 0.1 ppm skatol.

Since the aforementioned flavouring substances are particularly appreciated in products having a dairy-like flavour, the overall flavour composition preferably comprises additional flavour components often found in such products. Thus the present food product may advantageously contain from 1-20 ppm butyric acid, particularly non-dissociated butyric acid. Preferably the amount of non-dissociated butyric acid is in the range of 1-10 ppm.

Also the inclusion of dimethyl sulphide at concentration levels from 0.03 to 0.5 ppm is found to yield beneficial results. Another flavouring substance which can advantageously be included in the present food product is acetic acid. The latter acid is preferably present at a concentration level in the range of 10 to 200 ppm.

The benefits of the adjusted flavour composition in accordance with the present invention are particularly pronounced in food products combining an extremely low level of fat with a very high water content. Thus according to a preferred embodiment of the invention the food product contains not more than 3 wt.% fat and from 70-98 wt.% water. Most preferably the present product contains even less than 2 wt.% fat and from 80-98 wt.% water. Since the reduction of fat levels is normally accompanied by the introduction of rheological defects we prefer to include one or more ingredients selected from the group consisting of emulsifiers, thickening and/or gelling agents. The latter ingredients can suitably be used to achieve a rheology which is comparable to the rheology of a similar food product of higher fat content. The latter ingredients are generally present in the food product at a concentration level in the range of 2-25 wt.%, more preferably in the range of 3-15 wt.%. According to a very preferred embodiment of the present invention fat, water and the latter ingredients together constitute at least 95 wt.% of the total food product.

Examples of emulsifiers, gelling agents and thickening agents which can suitably be employed in accordance with the present invention are: monoglycerides, diglycerides, starch derivatives, inuline, gums, gelatin, carrageenan, agar, alginate, gellan, whey protein, soy protein etc. Examples of starch derivatives which can utilized in the present product are native starch, hydrolyzed starch, chemically modified starch and mixtures thereof.

We have surprisingly found, that the inclusion of a small amount of fat in the present food product can be advantageous, because it overcomes the quick disappearance of the taste impression after ingestion of the product, which accompagnies the total absence of fat. The latter phenomenon may effectively be tackled by the inclusion of at least 0.2 wt.%, preferably at least 0.4 wt.% of fat in the food product.

The advantages of the invention are particularly evident in food products which have been developed as low fat alternatives for dairy products such as butter and cream. Accordingly the present food product preferably is a low fat spread or a low fat cream. Most preferably the present food product is a spread.

The invention will be further illustrated by means of the following examples:

### Example 1

Two identical fat-free spreads A and B are prepared using the following (overall) composition:

| | |
|---|---|
| 3.0 wt.% | gelatin |
| 10.0 wt.% | Paselli SA2™ |
| 1.0 wt.% | whey powder (60% protein) |
| 0.04 wt.% | xanthan gum |
| 1.0 wt.% | NaCl |
| 0.1 wt.% | potassium sorbate |
| 0.0005 wt.% | beta-carotene |
| 0.10 wt.% | dairy flavour cocktail |
| lactic acid to pH 4.8 the balance of water | |

All ingredients except the flavour were stirred into the water. The mixture was heated to 80°C to pasteurize it. Then it was cooled down to 65°C and the flavour cocktail was admixed. The composition was cooled down by passage through a scraped surface heat-exchanger (A-unit) to about 1°C.
To the two spreads flavour cocktails are added at a dosage level of 1 part cocktail per 1000 parts of product. Cocktails A has a usual ingredients composition, cocktail B is constituted according to the present invention.

| | Cocktail A ppm | Cocktail B ppm |
|---|---|---|
| 5-decanolide | 4000 | 300 |
| 5-dodecanolide | 6000 | 200 |
| diacetyl | 1000 | 1500 |
| 2-heptanone | 500 | 40 |
| indol | 100 | 5 |
| skatol | 400 | 5 |
| dimethyl sulphide | 80 | 60 |
| butyric acid | 4000 | 5000 |
| acetic acid | 40000 | 50000 |

The pH of both products was adjusted to 4.9 with lactic acid. The carrier material of the flavour cocktails is glycerol. For the results of an organoleptic assessment see Table I. Flavour cocktail A which imparts a pleasant buttery flavour when added to a margarine (containing about 80 wt.% fat and 20 wt.% water) imparts to the fat-free spread, however, an unacceptable pungent flavour. The spread B flavoured with cocktail B on the contrary produces a mild buttery flavour-impression.

### Example 2

Example 1 is repeated with the exception that the spreads A and B additionally contain 3 wt.% fat (refined palm oil) which fat is finely dispersed into the water. For the results of an organoleptic assessment see Table I. Again it is found that the spread containing cocktail A has an unacceptable flavour. The spread containing cocktail B is found to have an agreeable flavour and is judged to have an even slightly better flavour than product B of Example 1 containing the same cocktail.

### Example 3

Two fat-free spreads A' and B' are prepared using the following ingredients:

| | |
|---|---|
| Distilled water | 93.6% |
| Monoglycerides (Hymono™ 1103) | 6 % |
| Co-surfactant (Admul™ SSL 2004) | 0.3% |
| Potassium sorbate | 0.1% |
| Cold water soluble (=CWS) β-carotene | trace |
| Flavour | trace |
| Lactic acid | trace |

The water was heated in a water-jacketed vessel until a temperature of 65°C. At the point all other ingredients were added to the water and the mixture was stirred gently, using a "ribbon stirrer", for about 30 minutes. The pH of the resulting mesomorphic phase was set to a value of 4.6 using lactic acid.
Subsequently the mesomorphic phase was cooled using a scraped surface heat exchanger (Votator, A-unit) until a temperature of 12°C. The A-unit was operated at a throughput of 1 Kg/h and at high speed (2000 rpm).
The flavour cocktails to be added to the 2 spreads have the same compositions as described in Example 1 and again the dosage level is 1 part per 1000 parts of product. Also the pH was again adjusted to 4.9 with lactic acid.

For the results of an organoleptic assessment see Table I. The spread containing cocktail A is found to have an unacceptable flavour which is very much alike that of the product A containing the same cocktail described in Example 1. The spread B flavoured with cocktail B is found to possess a pleasant butter-like flavour.

**Table I**

| ORGANOLEPTIC ASSESSMENT | | |
|---|---|---|
| Spreads | with cocktail A | with cocktail B |
| Example 1 0% fat | Pungent flavour | Mild buttery flavour |
| Example 2 3% fat | Unacceptable | Agreeable flavour |
| Example 3 0% fat | Unacceptable | Pleasant butter-like flavour |

## Claims

1. Flavoured food product containing not more than 4 wt.% fat and at least 50 wt.% water, which contains 0.02-0.5 ppm 5-decanolide and/or from 0.01-0.5 ppm 5-dodecanolide; and 0.5-40 ppm diacetyl.

2. Food product according to claim 1, which product contains 0.002-0.1 ppm 2-heptanone.

3. Food product according to claims 1-2, which product contains 0.001-0.04 ppm indol and/or 0.001-0.1 ppm skatol.

4. Food product according to any one of claims 1-3, which product contains 1-20 ppm butyric acid.

5. Food product according to any one of claims 1-4, which product contains 0.03-0.5 ppm dimethyl sulphide.

6. Food product according to any one of claims 1-5, which product contains not more than 3 wt.% fat and 70-98 wt.% water.

7. Food product according to any one of claims 1-6, which product contains one or more ingredients selected from the group consisting of emulsifiers, thickening and gelling agents.

8. Food product according to any one of claims 1-7, which product is selected from the group consisting of spreads and creams.

9. Food product according to any one of claims 1-8, which product contains at least 0.2 wt.% fat.

## Patentansprüche

1. Aromatisiertes Nahrungsmittel, enthaltend nicht mehr als 4 Gew.-% Fett und mindestens 50 Gew.-% Wasser, das 0,02 bis 0,5 ppm 5-Decanolid und/oder 0,01 bis 0,5 ppm 5-Dodecanolid und 0,5 bis 40 ppm Diacetyl enthält.

2. Nahrungsmittel nach Anspruch 1, das 0,002 bis 0,1 ppm 2-Heptanon enthält.

3. Nahrungsmittel nach den Ansprüchen 1 bis 2, das 0,001 bis 0,04 ppm Indol und/oder 0,001 bis 0,1 ppm Skatol enthält.

4. Nahrungsmittel nach irgendeinem der Ansprüche 1 bis 3, das 1 bis 20 ppm Buttersäure enthält.

5. Nahrungsmittel nach irgendeinem der Ansprüche 1 bis 4, das 0,03 bis 0,5 ppm Dimethylsulfid enthält.

6. Nahrungsmittel nach irgendeinem der Ansprüche 1 bis 5, das nicht mehr als 3 Gew.-% Fett und 70 bis 98 Gew.-% Wasser enthält.

7. Nahrungsmittel nach irgendeinem der Ansprüche 1 bis 6, das einen oder mehrere Bestandteile, ausgewählt aus der aus Emulgatoren, Verdickungs- und Geliermitteln bestehenden Gruppe, enthält.

8. Nahrungsmittel nach irgendeinem der Ansprüche 1 bis 7, das aus der aus Aufstrichen und Sahnen bestehenden Gruppe ausgewählt ist.

9. Nahrungsmittel nach irgendeinem der Ansprüche 1 bis 8, das mindestens 0,2 Gew.-% Fett enthält.

## Revendications

1. Produit alimentaire aromatisé contenant au plus 4 % de matière grasse et au moins 50 % d'eau, qui compte de 0,02 à 0,5 ppm de 5-décanolide et/ou de 0,01 à 0,5 ppm de 5-dodécanolide ; et de 0,5 à 40 ppm de diacétyle.

2. Produit alimentaire selon la Revendication 1, qui contient de 0,002 à 0,1 ppm de 2-heptanone.

3. Produit alimentaire selon la Revendication 1 ou 2, qui contient de 0,001 à 0,04 ppm d'indol et/ou de 0,001 à 0,1 ppm de scatol.

4. Produit alimentaire selon l'une quelconque des Revendications 1 à 3, qui contient de 1 à 20 ppm d'acide butyrique.

5. Produit alimentaire selon l'une quelconque des Revendications 1 à 4, qui contient de 0,03 à 0,5 ppm de sulfide de diméthyle.

6. Produit alimentaire selon l'une des Revendications 1 à 5, qui contient au plus 3 % en masse de matière grasse et de 70 à 98 % en masse d'eau.

7. produit alimentaire selon l'une des Revendications 1 à 6, qui contient un ou plusieurs ingrédients sélectionnés parmi le groupe composé d'émulsifiants, d'agents épaississants et d'agents gélifiants.

8. Produit alimentaire selon l'une quelconque des Revendications 1 à 7, qui est sélectionné parmi le groupe composé de pâtes à tartiner et de crèmes.

9. Produit alimentaire selon l'une quelconque des Revendications 1 à 8, qui contient au moins 2 % en masse de matière grasse.
